# DEMANDE DE BREVET EUROPEEN

(11) **EP 0 543 437 A1**
(43) Date de publication de la demande: **26.05.1993**
(21) Numéro de dépôt: 92203411.1
(22) Date de dépôt: 06.11.1992
(51) Int. Cl.: B23K 13/01, B23K 37/053

(54) **Installation de soudage par induction et bout à bout de tubes métalliques**

(30) Priorité: 21.11.1991 BE 9101074
(71) Demandeur: Bosteels, Henri, B-1020 Bruxelles (BE)
(72) Inventeur: Bosteels, Henri, B-1020 Bruxelles (BE)
(74) Mandataire: Claeys, Pierre

(57) **Abrégé**

Installation de soudage par induction et bout à bout de deux tubes métalliques (2, 3), en particulier d'éléments de tuyauterie, comportant un dispositif porteur (6, 7) pour chacun des deux tubes métalliques (2, 3), des moyens de déplacement (11) des deux dispositifs porteurs (6, 7), des moyens d'alignement (13) des deux dispositifs porteurs (6, 7), un inducteur annulaire (16) coopérant avec les deux extrémités à souder et sensiblement coaxial à celles-ci, et un générateur électrique pour alimenter l'inducteur (16) en courant, un des dispositifs porteurs (6, 7) précité étant monté sur les moyens de déplacement et/ou d'alignement (11 et/ou 13) de façon à pouvoir tourner autour d'un axe de rotation confondu avec l'axe longitudinal (100) du tube métallique (2, 3) qui peut faire partie d'un élément de raccordement à positionner par rapport au tube (3, 2) supporté par l'autre dispositif porteur (7, 6).

## Description

La présente invention concerne une installation de soudage par induction et bout à bout de deux tubes métalliques, en particulier d'éléments de tuyauterie, qui présentent à l'endroit du soudage des faces d'extrémité correspondantes pouvant être mises en contact sur au moins une partie importante de leurs surfaces, l'installation comportant :
- un dispositif porteur pour chacun des deux tubes métalliques à souder,
- des moyens de déplacement des deux dispositifs porteurs pour, d'une part, rapprocher à une distance déterminée et ensuite mettre en contact les faces d'extrémité à souder et, d'autre part, exercer une pression sur ces faces,
- des moyens d'alignement des deux dispositifs porteurs pour que les faces des deux extrémités à souder soient en contact sur au moins la partie importante de leurs surfaces susdites lorsque les faces sont en pression,
- un inducteur annulaire coopérant avec les deux extrémités à souder et sensiblement coaxial à celles-ci, ledit inducteur n'ayant aucun contact avec les tubes métalliques à souder bout à bout et étant de préférence réalisé en cuivre ou en alliage de cuivre, et
- un générateur électrique pour alimenter l'inducteur en courant.

On connaît des dispositifs et procédés de soudage par induction pour des tubes métalliques mais ils ne sont pas adaptés par exemple à l'assemblage d'un tube et d'un élément de raccordement présentant un bout de tube pour le soudage. Des éléments de raccordement de ce genre peuvent présenter la forme de brides, de coudes, de réductions, etc.

De plus, les dispositifs connus fonctionnent à des fréquences comprises entre 10.000 et 300.000 Hz et cela nécessite avant soudage un usinage de très haute précision des extrémités à fixer ensemble. En outre, à ces fréquences, le positionnement des bouts de tubes à souder ensemble doit aussi être très précis. Enfin, dans ces conditions, il est généralement nécessaire de prévoir un apport de chaleur supplémentaire par exemple par frottement d'un d'un bout contre l'autre. Il résulte donc, lors de la mise en oeuvre des dispositifs connus, en raison de l'usinage, du positionnement et de l'apport de chaleur des coûts supplémentaires.

La présente invention a pour but d'éliminer ces inconvénients et de prévoir des moyens d'alignement et de positionnement des extrémités de tubes à souder l'une par rapport à l'autre, qui, en combinaison avec un inducteur alimenté en basse ou moyenne fréquence permettent d'abord, les extrémités étant quelque peu écartées l'une de l'autre, un chauffage lent et uniforme avec pénétration en profondeur de la chaleur dans les tubes et sur le pourtour de ces derniers et ensuite un soudage, dans une position déterminée, par pression d'une extrémité de tube contre l'autre (soudage par forgeage) lorsqu'une température suffisante pour le soudage par forgeage est atteinte.

A cet effet, suivant l'invention, dans l'installation susdite un des dispositifs porteurs précité est monté sur les moyens de déplacement et/ou d'alignement de façon à pouvoir tourner autour d'un axe de rotation confondu avec l'axe longitudinal du tube métallique, le tube métallique fixé au dispositif porteur en question pouvant faire partie d'un élément de raccordement à positionner, par rotation autour de l'axe précité, par rapport au tube supporté par l'autre dispositif porteur.

Suivant une forme de réalisation avantageuse de l'invention, lesdits moyens adaptés au tube, associés au dispositif porteur, sont formés d'au moins deux parties disposées de part et d'autre du tube et fixées l'une à l'autre de façon à enserrer ce dernier ou l'élément de raccordement comportant le tube à souder.

Suivant une forme de réalisation particulierement avantageuse de l'invention, l'inducteur est formé d'une seule spire et le générateur électrique fournit de préférence à l'inducteur un courant dont la fréquence est comprise sélectivement entre 400 et 2.900 Hz et avantageusement entre 500 et 2.500 Hz.

De préférence, suivant l'invention, l'installation comporte un dispositif de régulation raccordé
- au générateur et/ou à l'inducteur et agencé pour ajuster, à partir d'une température de soudage déterminée, l'alimentation en courant électrique de l'inducteur de manière à commander, après soudage, un ralentissement du refroidissement des extrémités de tube comportant les faces soudées, et/ou
- à des moyens d'accélération de ce refroidissement.

D'autres détails et particularités de l'invention ressortiront de la description des dessins qui sont annexés au présent mémoire et qui illustrent, à titre d'exemples non limitatifs, une forme de réalisation particulière de l'installation suivant l'invention.

La figure 1 montre schématiquement, dans une vue latérale en élévation avec brisures partielles, une forme de réalisation particulière d'une installation suivant l'invention.

Les figures 2 et 3 montrent chacune schématiquement, dans une vue latérale en élévation et en coupe avec brisures partielles, une forme particulière de réalisation d'un dispositif porteur suivant l'invention adapté à un élément de raccordement particulier.

La figure 4 montre schématiquement, dans une vue latérale en élévation et en coupe, une autre forme de réalisation particulière d'un dispositif porteur suivant l'invention.

La figure 5 montre schématiquement dans une vue frontale en élévation, une forme particulière de réalisation d'un dispositif porteur suivant l'invention.

Dans les différentes figures, les mêmes notations de référence désignent des éléments identiques ou analogues.

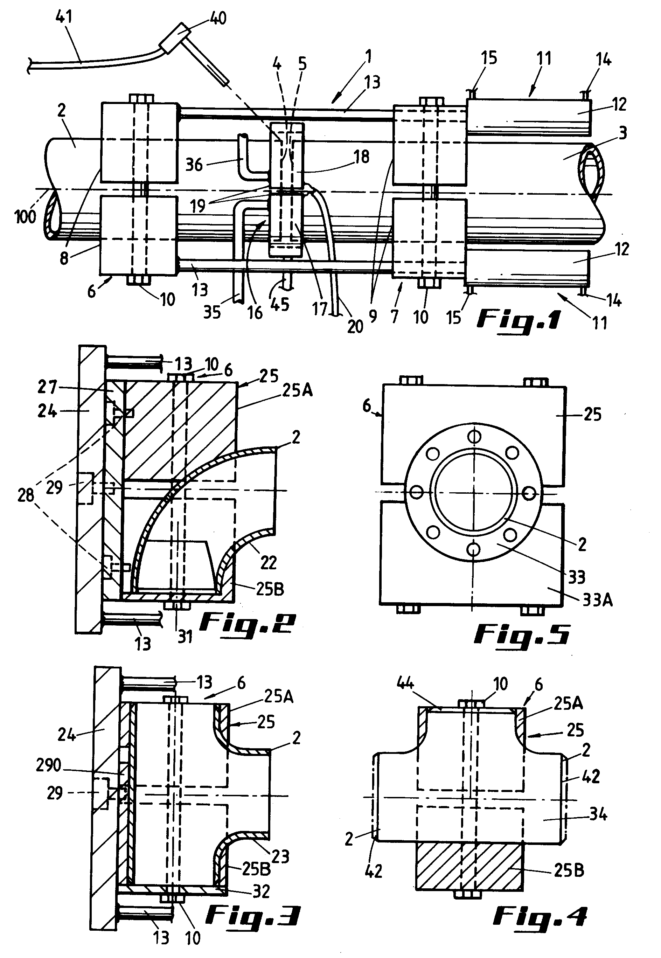

L'installation de soudage par induction 1 de la figure 1 suivant l'invention est destinée par exemple au soudage d'éléments de tuyauterie. Deux tubes métalliques 2, 3 à souder bout à bout présentent chacun aux extrémités qui doivent être soudées ensemble un face 4, 5 qui doit être mise en contact avec au moins une partie importante de la face 5 ou respectivement 4 de l'extrémité correspondante de l'autre tube 3 ou respectivement 2, lors du soudage. Dans la forme de réalisation décrite, les tubes 2 et 3 sont alignés suivant un axe commun 100.

L'installation de soudage 1 peut par exemple servir au soudage de tubes de l'ordre de 1.500 mm présentant une épaisseur de paroi de l'ordre de 150 mm, en acier, acier allié ou acier inoxydable. Une installation de soudage 1 peut cependant aussi être conçue suivant l'invention pour des diamètres et épaisseurs inférieurs, par exemple de 50 mm de diamètre et de 3 mm d'épaisseur.

L'installation suivant l'invention comporte entre autres un dispositif porteur 6, 7 pour chaque tube 2, 3, ces dispositifs porteurs pouvant avoir la forme de demi-brides 8 et 9 dans l'exemple de réalisation de la figure 1, les demi-brides 8 ou 9 enserrant par exemple le tube 2 ou respectivement 3 à l'aide de boulons 10 pour que leur enveloppe commune présente une section, perpendiculaire à l'axe commun 100, sensiblement rectangulaire. L'installation comporte aussi des moyens de déplacement, par exemple sous la forme de quatre vérins hydrauliques 11 dont les corps 12 peuvent être fixés aux quatre coins de la section rectangulaire susdite du dispositif porteur 7 à l'opposé de l'autre dispositif porteur 6. Ces vérins 11 sont par exemple agencés pour que leurs tiges 13 s'étendent au travers du dispositif porteur 7, parallèlement à l'axe commun 100, jusqu'au dispositif porteur 6, où elles sont par exemple soudées aux quatre coins de la section rectangulaire de ce dispositif 6, pour servir de moyens d'alignement pour les deux tubes 2 et 3 suivant ledit axe commun 100. Les quatre vérins hydrauliques 11 peuvent être alimentés de façon connue en un fluide adéquat par leurs entrées 14, 15 pour rapprocher et écarter l'un de l'autre les dispositifs porteurs 6, 7 et en conséquence les tubes 2, 3. De cette façon, les faces 4, 5 peuvent être mises à une distance déterminée l'une de l'autre, être mises en contact l'une avec l'autre ou être mises en pression l'une avec l'autre. Par l'agencement des tiges de vérin 13, lors desdites mise en contact et mise en pression, les faces 4, 5 sont en contact par une partie importante de leur surface respective et de préférence sur toute leur surface respective.

L'installation suivant l'invention comporte en outre un inducteur annulaire 16 qui peut être constitué d'une seule spire conductrice composée par exemple d'une demi-spire inférieure 17 sur laquelle est fixée de façon démontable une demi-spire supérieure 18, une extrémité (non visible) de la demi-spire inférieure 17 étant raccordée à l'extrémité correspondante (non visible) de la demi-spire supérieure 18 pour permettre le passage d'un courant inductif. Les autres extrémités 19 des demi-spires 17, 18 sont isolées l'une de l'autre et reliées par un conducteur respectif, d'un câble électrique 20 schématisé, à un générateur électrique non représenté prévu pour alimenter en courant l'inducteur annulaire 16. Ce dernier, à section rectangulaire à titre d'exemple, est maintenu de façon connue pour n'avoir aucun contact avec les tubes 2, 3 ni avec les dispositifs porteurs. De préférence, les demi-spires 17, 18 sont réalisées en cuivre ou en un alliage de cuivre. L'axe de l'inducteur annulaire 16 peut être avantageusement superposé à l'axe commun 100 pour qu'il n'y ait pas de contact électrique avec les tubes 2, 3, le diamètre interne de l'inducteur 16 étant sensiblement supérieur au diamètre externe des tubes à souder.

En particulier, lorsque le tube 2 appartient à un élément de raccordement du genre courbe 22 ou raccord en té 23, les moyens de déplacement et d'alignement peuvent présenter une plaque 24, illustrée aux figures 2 et 3, à laquelle sont fixées les tiges de vérin 13 pour que l'axe de l'extrémité du tube 2 soit superposé à l'axe commun 100, le dispositif porteur 6 comprenant dans ce cas un système de fixation 25 adapté à la forme de l'élément de raccordement (courbe 22, raccord en té 23, ...) et comportant par exemple deux parties 25A et 25B qui enserrent cet élément.

A la figure 2, le dispositif porteur 6 comporte en outre une pièce de raccord 27 fixée par des vis 28 au système de fixation 25 pour permettre d'agencer, suivant une forme de réalisation de l'invention, dans l'axe du tube 2 une vis de fixation et de pivotement 29 du dispositif porteur 6 sur la plaque 24. Ainsi cette vis 29 permet, d'une part, le pivotement de la courbe 22 autour de l'axe commun 100 et, d'autre part, la fixation du dispositif porteur 6 et donc de la courbe 22 dans une position déterminée pour le soudage au tube 3. Dans cette figure 2, un positionnement précis de la courbe 22 dans le système de fixation 25 est assuré par un bouchon 31 qui peut être réalisé d'une pièce avec la partie 25B et qui pénètre dans un orifice d'extrémité de la courbe 22.

A la figure 3, suivant une autre forme de réalisation de l'invention, la partie 25B présente sur sa face appliquée contre la plaque 24 une saillie 290 dans laquelle est vissée la vis de fixation et de pivotement 29 pour que l'axe de la vis soit confondu avec l'axe commun 100.

De plus, une plaque 32 associée à la partie 25B sert à la localisation du té dans les parties 25A et 25B. Cette plaque 32 peut être réalisée d'une pièce avec la partie 25B correspondante.

La figure 4 montre un cas particulier de dispositif porteur 6 pour la fixation d'un raccord en té 34 de façon à présenter au soudage un de ses tubes 2 dans le prolongement d'un deuxième tube 2A et à 90° d'un troisième tube 2B qui passe au travers de la partie 25A.

La figure 5 montre un cas particulier du dispositif porteur 6 de la figure 2 sur la face externe 33A duquel est fixée une bride 33 comportant une portion de tube 2 pour le soudage à l'extrémité d'un tube 3. De plus, d'autres dispositifs porteurs 6 ou systèmes de fixation 25 peuvent être prévus pour recevoir différents éléments de raccordement.

Les plaques 24 des figures 2 et 3 peuvent être choisies pour que leurs dimensions et l'écartement entre tiges de vérin 13 soient compatibles avec plusieurs systèmes de fixation 25 et permettent la rotation de ceux-ci autour de l'axe de la vis 29, ces systèmes de fixation 25 étant interchangeables en fonction des éléments de raccordement à souder à un tube.

De même, le dispositif porteur 7 peut être réalisé pour être adapté à plusieurs dimensions et/ou formes de tubes 3, par exemple par échange d'au moins une partie des demi-brides 9 avec une autre partie de demi-bride 9 adaptée à un autre diamètre extérieur de tube 3.

L'inducteur 16 de l'invention peut être creux pour être refroidi par un fluide adéquat connu de l'homme du métier. En effet, dans l'exemple de réalisation de la figure 1, les deux demi-spires 17 et 18 qui forment le conducteur de l'inducteur 16 peuvent être réalisées chacune en forme de tube à section rectangulaire dont les deux bouts ont été bouchés, la demi-spire inférieure 17 étant par exemple alimentée avec ce fluide adéquat par un tuyau 35 soudé près de son extrémité 19. L'autre extrémité non visible de la demi-spire inférieure 17 peut être raccordée, par un tuyau non représenté, à l'extrémité non visible de la demi-spire 18 pour permettre l'écoulement du fluide de la demi-spire 17 dans l'autre demi-spire 18, le fluide pouvant être évacué de cette dernière par un tuyau 36 fixé à son extrémité 19 de cette demi-spire 18, à la manière du tuyau 35.

L'inducteur 16 suivant l'invention a avantageusement un diamètre intérieur supérieur, par exemple d'au moins 40 mm, par rapport au diamètre extérieur des tubes 2, 3 à souder bout à bout. Les tubes 2, 3 à souder bout à bout peuvent avoir de grandes différences de diamètres. De plus, les tubes 2, 3 peuvent présenter une ovalisation. L'existence de cette différence d'au moins 40 mm par rapport au plus grand diamètre externe des tubes 2, 3 permet que le champ magnétique d'un inducteur 16 à spire creuse unique refroidie par exemple à l'eau s'adapte aux variations de distance inducteur/tube et aux variations d'épaisseur de tube pour procurer un chauffage uniforme régulier lorsque le champ magnétique est très puissant et lorsque l'inducteur est dimensionné en conséquence.

Suivant l'invention, le générateur électrique fournit à l'inducteur 16 un courant dont la fréquence est comprise selectivement entre 400 et 2.900 Hz et avantageusement entre 500 et 2.500 Hz.

Par exemple, pour souder bout à bout par l'installation suivant l'invention deux tubes de 457 mm de diamètre et de 50 mm d'épaisseur, le générateur doit fournir une puissance de 420 kW à 640 volts, à une fréquence de 750 Hz.

Comme générateur pour des tubes dont le diamètre externe est compris entre 406 et 914 mm, il convient d'utiliser par exemple un convertisseur statique à thyristors à fréquence infiniment variable dans tous son réglage de puissance.

L'installation de soudage suivant l'invention comporte de préférence un dispositif de régulation non représenté raccordé au générateur et/ou à l'inducteur 16 et agencé pour ajuster, à partir d'une température de soudage déterminée, l'alimentation en courant électrique par le câble 20 de l'inducteur 16 de manière à commander, pendant le soudage des variations de fréquence et/ou d'intensité et/ou de temps pour obtenir un chauffage optimum des faces 4, 5 à souder. On peut par exemple prévoir une modulation de la fréquence, à partir de la fréquence choisie pour le soudage, vers une fréquence plus basse pour maintenir pendant un certain temps une température déterminée dans la masse soudée. Cette modulation de fréquence peut être de préférence programmée en fonction des tubes 2, 3 concernés, un programme ainsi établi étant chargé dans le dispositif de régulation et exploité par ce dernier pour gérer le soudage.

Le même dispositif de réglage pour commander un refroidissement programmé pendant le soudage peut être utilisé avantageusement pour réaliser un refroidissement prédéterminé de la soudure terminée.

Comme l'installation de soudage 1 suivant l'invention peut comporter avantageusement un pyromètre 40 pour surveiller les températures, par exemple par mesure optique, des extrémités de tubes 2, 3 à l'endroit de soudage ou à proximité de celui-ci, ce pyromètre 40 peut être raccordé par un cable 41 au dispositif de régulation, de préférence pour coopérer à la gestion de la vitesse de refroidissement, par exemple après avoir détecté l'obtention de la température de soudage désirée et ensuite des températures successives à des moments déterminés.

Pour la gestion de la vitesse de refroidissement, l'installation de soudage 1 suivant l'invention peut encore comporter suivant l'invention des moyens d'accélération du refroidissement des extrémités des tubes 2, 3 soudées. Ces moyens d'accélération peuvent avantageusement comporter des moyens de répartition d'un fluide de refroidissement sur les extrémités soudées bout à bout et sur la soudure. Ces moyens de répartitions sont de préférence raccordés au dispositif de régulation pour leur commande.

Le fluide utilisé pour le refroidissement de l'inducteur 16, par exemple de l'eau, peut aussi éventuellement convenir pour le refroidissement desdites extrémités et de la soudure.

Les moyens de répartition peuvent en outre être avantageusement raccordés au tuyau de sortie 36 du fluide de refroidissement du conducteur de l'inducteur 16.

Pour le soudage de deux tubes 2, 3 bout à bout, il faut que les bouts de tube soient plats, par exemple par un dressage des faces 4, 5 sur une aléseuse. S'il existe un chanfrein, comme représenté par exemple à la figure 4 en traits mixtes en 42 pour le té 34, il est nécessaire de le supprimer. Le chanfrein 44 de la figure 4 peut être maintenu pour un assemblage classique.

Lorsque des tubes 2, 3 ou élément de raccordement 22, 23, 33, 34 sont placés dans l'installation de soudage 1 et correctement orientés et alignés l'un par rapport à l'autre (figure 1), l'inducteur 16 étant placé autour des extrémités correspondant aux faces 4, 5, les deux tubes 2, 3 à souder sont mis en contact au centre de l'inducteur 16. Le pyromètre optique est alors orienté vers la ligne de jonction des deux faces 4, 5 et, par après, les deux tubes sont légèrement écartés pour laisser un passage.

L'installation de soudage 1 comporte aussi avantageusement des moyens de distribution d'un gaz de protection, entre autres un gaz réducteur ou inerte ou un mélange de ceux-ci, amené par exemple par un conduit 45 (figure 1) qui traverse l'inducteur 16. Le gaz de protection peut s'écouler par le passage susdit entre les deux tubes pendant le soudage, pour protéger les deux faces 4, 5 sur tout le tour des tubes.

Par l'alimentation en courant de l'inducteur 16 à partir du générateur sous le contrôle du dispositif de régulation, les bouts des tubes 2, 3 se chauffent par induction, le courant électrique étant adapté en puissance et en fréquence au métaux à souder. Lorsque le pyromètre optique 40 détecte que la température déterminée pour le soudage par forgeage, de préférence inférieure à la température de fusion des métaux concernés, est atteinte, les vérins hydrauliques sont alimentés pour mettre en contact et en pression les deux faces 4, 5 et provoquer ainsi un soudage par pression. Par la pression, un bourrelet de métal peut être formé tant à l'intérieur qu'à l'extérieur des tubes. Le choix de la pression maximum donnée par les vérins 12 détermine la dimension des bourrelets. Le soudage proprement dit étant terminé, un programme stocké dans le dispositif de régulation peut régler la puissance et/ou la fréquence délivrée par le générateur pour refroidir progressivement les extrémités soudées des tubes 2, 3. De même, les moyens de répartition de fluide peuvent projeter en temps voulu de l'eau sur ces extrémités et sur la soudure obtenue suivant un programme préétabli stocké dans les moyens de réglage.

Il doit être entendu que l'invention n'est nullement limitée aux formes de réalisation décrites et que bien des modifications peuvent être apportées à ces dernières sans sortir du cadre de la présente invention.

## Revendications

1. Installation de soudage par induction et bout à bout de deux tubes métalliques (2, 3), en particulier d'éléments de tuyauterie, qui présentent à l'endroit du soudage des faces d'extrémité (4, 5) correspondantes pouvant être mises en contact sur au moins une partie importante de leurs surfaces, l'installation comportant :
- un dispositif porteur (6, 7) pour chacun des deux tubes métalliques (2, 3) à souder,
- des moyens de déplacement (11) des deux dispositifs porteurs (6, 7) pour, d'une part, rapprocher à une distance déterminée et ensuite mettre en contact les faces d'extrémité (4, 5) à souder et, d'autre part, exercer une pression sur ces faces (4, 5),
- des moyens d'alignement (13) des deux dispositifs porteurs (6, 7) pour que les faces (4, 5) des deux extrémités à souder soient en contact sur au moins la partie importante de leurs surfaces susdites lorsque les faces sont en pression,
- un inducteur annulaire (16) coopérant avec les deux extrémités à souder et sensiblement coaxial à celles-ci, ledit inducteur (16) n'ayant aucun contact avec les tubes métalliques (2, 3) à souder bout à bout et étant de préférence réalisé en cuivre ou en alliage de cuivre, et
- un générateur électrique pour alimenter l'inducteur (16) en courant,
caractérisé en ce qu'un des dispositifs porteurs (6, 7) précité est monté sur les moyens de déplacement et/ou d'alignement (11 et/ou 13) de façon à pouvoir tourner autour d'un axe de rotation confondu avec l'axe longitudinal (100) du tube métallique (2, 3), le tube métallique (2, 3) fixé au dispositif porteur (6, 7) en question pouvant faire partie d'un élément de raccordement (22, 23, 33, 34) à positionner, par rotation autour de l'axe précité, par rapport au tube (3, 2) supporté par l'autre dispositif porteur (7, 6).

2. Installation suivant la revendication 1, caractérisé en ce que chacun des deux dispositifs porteurs (6, 7) comporte, pour la fixation d'un tube (2, 3) déterminé, des moyens (8, 9, 25) adaptés audit tube, ces moyens étant amovibles de manière à pouvoir être interchangeables en fonction des caractéristiques des tubes (2, 3) à souder ou des éléments de raccordement (22, 23, 33, 34) comportant les tubes.

3. Installation suivant la revendication 2, caractérisée en ce que lesdits moyens (8, 9, 25) adaptés au tube associés au dispositif porteur (6, 7), sont formés d'au moins deux parties (8, 9, 25A, 25B) disposées de part et d'autre du tube (2, 3) et fixées l'une à l'autre de façon à enserrer ce dernier ou l'élément de raccordement (22, 23, 33, 34) comportant le tube à souder.

4. Installation suivant l'une quelconque des revendications 1 à 3, caractérisee en ce que l'inducteur (16) est formé d'une seule spire.

5. Installation suivant l'une quelconque des revendications 1 à 4, caractérisée en ce que l'inducteur (16) consiste en au moins un conducteur (17, 18) creux, de préférence parcouru par un fluide choisi parmi les fluides pouvant refroidir le conducteur.

6. Installation suivant l'une quelconque des revendications 1 à 5, caractérisée en ce que le générateur électrique fournit à l'inducteur (16) un courant dont la fréquence est comprise sélectivement entre 400 et 2.900 Hz et avantageusement entre 500 et 2500 Hz.

7. Installation suivant l'une quelconque des revendications 1 à 6, caractérisée en ce qu'elle comporte un dispositif de régulation raccordé
- au générateur et/ou à l'inducteur (16) et agencé pour ajuster, à partir d'une température de soudage déterminée, l'alimentation en courant électrique de l'inducteur de manière à commander, après soudage, un ralentissement du refroidissement des extremités de tube comportant les faces (4, 5) soudées, et/ou
- à des moyens d'accélération de ce refroidissement.

8. Installation suivant la revendication 7, caracterisée en ce qu'elle comporte un pyromètre (40) pour la détection de la température du tube (2, 3) à l'endroit du soudage, le pyromètre (40) étant avantageusement raccordé au dispositif de régulation.

9. Installation suivant la revendication 8, caracterisée en ce que le dispositif de régulation comporte un programme de commande agencé pour gérer la vitesse de refroidissement en fonction de températures mesurées par le pyromètre (40).

10. Installation suivant l'une quelconque des revendications 7 à 9, caractérisée en ce que les moyens d'accélération du refroidissement, comportent des moyens de répartition d'un fluide de refroidissement sur les extrémités soudées bout à bout et en ce que ces moyens de répartition sont raccordés au dispositif de régulation pour leur commande, ces moyens de répartition pouvant en outre être avantageusement raccordés à une sortie (36) du fluide du conducteur de l'inducteur (16).

11. Installation suivant l'une quelconque des revendications 1 à 6, caractérisée en ce que le générateur comporte des moyens de réglage qui peuvent être programmés pour modifier en cours de soudage la fréquence et/ou l'intensité et/ou le temps de soudage.

12. Installation suivant l'une quelconque des revendications 1 à 11, caractérisée en ce qu'elle comporte des moyens de distribution (45) d'un gaz de protection à l'endroit de soudage, ce gaz pouvant être inerte et/ou réducteur.
